# EUROPEAN PATENT APPLICATION

(11) **EP 4 210 438 A1**
(43) Date of publication of application: **12.07.2023**
(21) Application number: 23150455.6
(22) Date of filing: 05.01.2023
(51) Int. Cl.: H05B 6/06

(54) **INDUCTION HEATING DEVICE**

(30) Priority: 05.01.2022 KR 20220001833; 10.05.2022 KR 20220057479
(71) Applicant: LG Electronics, Inc., Yeongdeungpo-gu Seoul 07336 (KR)
(72) Inventor: JEONG, Sihoon, 08592 Seoul (KR); KANG, John, 08592 Seoul (KR); KANG, Kyelyong, 08592 Seoul (KR)
(74) Representative: Ter Meer Steinmeister & Partner

(57) **Abstract**

An induction heating device of one embodiment comprises a working coil, an inverter comprising a first switching element and a second switching element and supplying a resonance current to the working coil, a phase sensing circuit outputting a pulse signal that indicates a phase difference between the resonance current and a switching voltage of the second switching element, and a controller calculating a final phase difference between the resonance current and the switching voltage of the second switching element, based on the pulse signal, and adjusting an output power value of the working coil, based on the final phase difference. In one embodiment, the final phase difference may be an average of a plurality of phase differences that is calculated during a predetermined detection duration.

## Description

### TECHNICAL FIELD

The present disclosure relates to an induction heating device.

### BACKGROUND

Induction heating devices generate eddy currents in a metallic container by using a magnetic field that is created around a working coil, to heat the container. As an induction heating device operates, AC currents are supplied to the working coil. As the AC currents are supplied to the working coil, an induced magnetic field is created around the working coil. As the magnetic line of force of the induced magnetic field, created around the working coil, passes through the bottom surface of the metallic container placed on the working coil, eddy currents are generated in the container. As the eddy currents flow in the container, the container is heated by Joule heat that is generated by the resistance of the container.

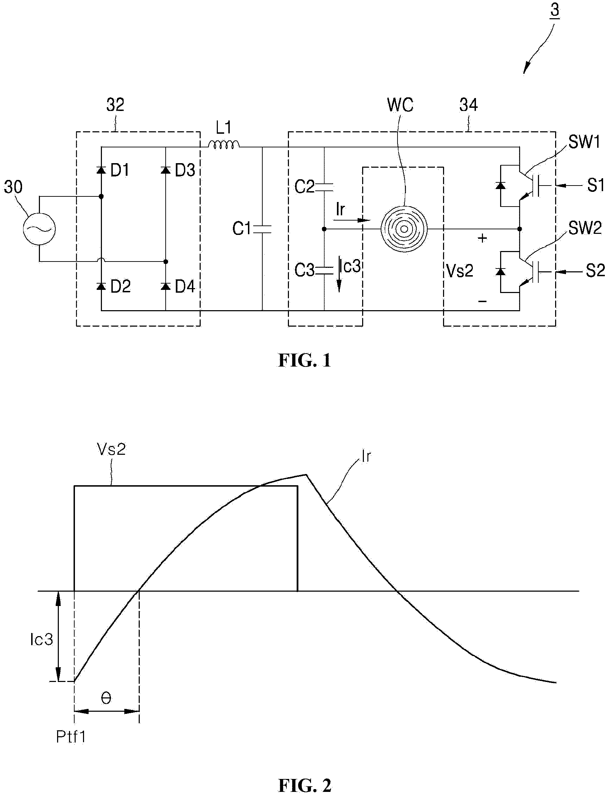

FIG. 1 is a schematic view showing a circuit configuration of an induction heating device.

An induction heating device 3 comprises a rectification circuit 32, a smoothing circuit L1, C1, an inverter 34, and a working coil WC.

The rectification circuit 32 comprises a plurality of diode elements D1, D2, D3, D4. The rectification circuit 32 rectifies an AC input voltage that is supplied from a power supply device 30, and outputs a voltage having a pulse waveform.

The smoothing circuit L1, C1 smoothes the voltage rectified by the rectification circuit 32 and outputs a DC link voltage. The smoothing circuit L1, C1 comprises an inductor L1 and a DC link capacitor C1.

The inverter 34 comprises a first switching element SW1, a second switching element SW2, a first snubber capacitor C2, and a second snubber capacitor C3. The first switching element SW1 and the second switching element SW2 are complementarily turned on and turned off respectively by a first switching signal S1and a second switching signal S2. A resonance current Ir for driving the working coil WC is generated based on a DC link voltage that is output from the smoothing circuit L1, C1, as a result of the complementary turn-on and turn-off operations, i.e., the switching operations, of the first switching element SW1and the second switching element SW2. As the resonance current Ir is supplied to the working coil WC, a container placed on the working coil WC is heated while an eddy current flows in the container.

At a time when the first switching element SW1 and the second switching element SW2 perform a switching operation, the first snubber capacitor C2 needs to charge electricity completely before the first switching element SW1 is turned on. If the electric discharge of the first snubber capacitor C2 is not completed before the turn-on of the first switching element SW1, i.e., if the discharge loss of the first snubber capacitor C2 occurs, the discharge current Ics2 of the first snubber capacitor C2 flows to the first switching element SW1, causing the hard switching of the first switching element SW1. Thus, the first switching element SW1 can be overheated or damaged.

FIG. 2 is a view describing a phase difference between a resonance current Ir supplied to a working coil, and a switching voltage Vs2 of a second switching element.

As the resonance current Ir is supplied to the working coil WC in FIG. 1, a voltage is formed respectively at the first switching element SW1 and the second switching element SW2 while the first switching element SW1 and the second switching element SW2 are turned on and turned off alternately. The voltage formed at the first switching element SW1 and the second switching element SW2 can be referred to as a first switching voltage and a second switching voltage respectively.

FIG. 2 shows the resonance current Ir that is supplied to the working coil WC, and the second switching voltage Vs2 that is supplied to the second switching element SW2, respectively. The magnitude of the resonance current Ir at a time point Ptf1 when the second switching element SW2 is turned off, i.e., the magnitude of a current for discharging electricity of the first snubber capacitor C2, can be determined based on a phase difference θ between the resonance current Ir and the second switching voltage Vs2.

As the phase difference θ between the resonance current Ir and the second switching voltage Vs2 increases, the magnitude of the resonance current Ir increases at a time point Ptf1 when the second switching element SW2 is turned off, and the electric discharge time of the first snubber capacitor C2 decreases. Accordingly, before the first switching element SW1 is turned on, the electric discharge of the first snubber capacitor C2 can be completed.

On the contrary, as the phase difference θ between the resonance current Ir and the second switching voltage Vs2 decreases, the magnitude of the resonance current Ir decreases at a time point Ptf1 when the second switching element SW2 is turned off, and the electric discharge time of the first snubber capacitor C2 increases.

Accordingly, time taken for the first snubber capacitor C2 to discharge electricity completely is not enough. If the first switching element SW1 is turned on in the state where the electric discharge of the first snubber capacitor C2 is not completed, the first switching voltage that is supplied to the first switching element SW1 decreases rapidly and becomes 0. In other words, the discharge loss of the first snubber capacitor C2 occurs.

As the discharge loss of the first snubber capacitor C2 occurs, the discharge current Ic2 of the first snubber capacitor C2 flows to the first switching element SW1, causing the hard switching of the first switching element SW1. Thus, the first switching element SW1 can be overheated or damaged.

To prevent this from happening, the phase difference θ between the resonance current Ir and the second switching voltage Vs2 needs to be measured accurately, while the induction heating device 3 is being driven.

### SUMMARY

The object of the present disclosure is to provide an induction heating device that can measure a phase difference between a resonance current of a working coil and a switching voltage of a switching element accurately.

The object of the present disclosure is to provide an induction heating device in which a phase difference between a resonance current of a working coil and a switching voltage of a switching element can remain at a predetermined reference value or greater at a time when an output power value of the working coil is adjusted, to prevent the switching element from being overheated or damaged.

Aspects of the present disclosure are not limited to the above ones, and other aspects and advantages that are not mentioned above can be clearly understood from the embodiments set forth herein. Additionally, the aspects and advantages in the present disclosure can be realized via components and combinations thereof that are described in the appended claims.

The objects are solved by the features of the independent claims. Preferred embodiments are given in the dependent claims.

An induction heating device of one embodiment comprises a working coil, an inverter comprising a first switching element and a second switching element and supplying a resonance current to the working coil, a phase sensing circuit outputting a pulse signal that indicates a phase difference between the resonance current and a switching voltage of the second switching element, and a controller calculating a final phase difference between the resonance current and the switching voltage of the second switching element, based on the pulse signal, and adjusting an output power value of the working coil, based on the final phase difference.

In one or more embodiments, the final phase difference may be an average of a plurality of phase differences that is calculated during a predetermined detection duration.

In one or more embodiments, the detection duration may be defined based on peak time of an input voltage that is input to the induction heating device.

In one or more embodiments, a lower bound of the detection duration may be set to be greater than a value that is calculated by multiplying the peak time by 0.9.

In one or more embodiments, an upper bound of the detection duration may be set to be less than a value that is calculated by multiplying the peak time by 1.1.

In one or more embodiments, the detection duration may be defined based on a cycle of an input voltage that is input to the induction heating device.

In one or more embodiments, the detection duration may be defined based on a value that is calculated by multiplying the cycle of the input voltage by 0.25.

In one or more embodiments, the controller may adjust a duty ratio and/or a switching frequency of a switching signal for controlling a switching operation of the first switching element and the second switching element, to adjust the output power value of the working coil.

In one or more embodiments, the controller may increase the output power value of the working coil if the final phase difference is a predetermined reference value or less.

In one or more embodiments, the final phase difference may remain at a value greater than the predetermined reference value.

In one or more embodiments, the phase sensing circuit may comprise a current sensing circuit outputting a first voltage, based on a resonance current of the working coil, which is sensed by a current transformer connecting between the working coil and the inverter.

In one or more embodiments, the phase sensing circuit may comprise a voltage sensing circuit outputting a second voltage, based on a switching voltage of the second switching element.

In one or more embodiments, the phase sensing circuit may comprise a pulse signal output circuit outputting the pulse signal, based on the first voltage and the second voltage.

In one or more embodiments, the current sensing circuit may comprise a first current sensing resistance connecting to a secondary side of the current transformer, a diode connecting to the first current sensing resistance, a second current sensing resistance connecting to the diode in series, a third current sensing resistance one end of which connects to the second current sensing resistance and the other end of which connects to ground, and a first comparator connecting to a first node between the second and third current sensing resistances and outputting the first voltage.

In one or more embodiments, the voltage sensing circuit may comprise a first voltage sensing resistance connecting to the second switching element, a second voltage sensing resistance one end of which connects to the first voltage sensing resistance and the other end of which connects to ground, and a second comparator connecting to a second node between the first and second voltage sensing resistances and outputting the second voltage.

In one or more embodiments, the pulse signal output circuit may comprise a first resistor for pulse generation connecting to an output terminal of the current sensing circuit, a second resistor for pulse generation connecting to an output terminal of the voltage sensing circuit, a third resistor for pulse generation connecting between the second resistor for pulse generation and ground, and a third comparator connecting to a fourth node that is disposed between a third node between the second resistor for pulse generation and the third resistor for pulse generation, and the first resistor for pulse generation, and outputting the pulse signal.

In the embodiments, a phase difference between a resonance current of a working coil and a switching voltage of a switching element can be measured accurately while an induction heating device operates.

In the embodiments, a phase difference between a resonance current of a working coil and a switching voltage of a switching element can remain at a predetermined reference value or greater at a time when an output power vale of the working coil is adjusted, while an induction heating device operates, such that the switching element is prevented from being overheated or damaged.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a schematic view showing the configuration of a circuit of an induction heating device;
FIG. 2 is a view for describing a phase difference between a resonance current that is supplied to a working coil, and a switching voltage of a second switching element;
FIG. 3 is a block diagram showing an induction heating device of one embodiment;
FIG. 4 is a view showing the waveforms of a voltage that is supplied to a first current sensing resistance, in one embodiment;
FIGS. 5 and 6 are circuit diagrams for describing the operation of a diode, based on a resonance voltage that is supplied to the first current sensing resistance, in one embodiment;
FIG. 7 is a waveform diagram showing a resonance voltage that is supplied to the first current sensing resistance, and a resonance voltage that is supplied to second and third current sensing resistances, in one embodiment;
FIGS. 8 and 9 are views showing the waveform of a first voltage that is output from a current sensing circuit, in one embodiment;
FIG. 10 is a view showing the waveform of a second voltage that is output from a voltage sensing circuit, in one embodiment;
FIG. 11 is a view showing the waveforms of the first voltage, the second voltage and a pulse signal, in one embodiment;
FIG. 12 is a view showing the waveform of an input voltage that is input to the induction heating device, in one embodiment;
FIG. 13 is a view showing the waveforms of a first switching signal that is supplied to a first switching element, and a second switching signal that is supplied to a second switching element, in one embodiment; and
FIG. 14 is a graph showing a curve of the resonance properties of a working coil.

### DETAILED DESCRIPTION

The above-described aspects, features and advantages are specifically described hereafter with reference to accompanying drawings such that one having ordinary skill in the art to which the present disclosure pertains can embody the embodiments of the disclosure easily. In the disclosure, detailed description of known technologies in relation to the disclosure is omitted if it is deemed to make the gist of the disclosure unnecessarily vague. Hereafter, preferred embodiments of the disclosure are specifically described with reference to the accompanying drawings. In the drawings, identical reference numerals can indicate identical or similar components.

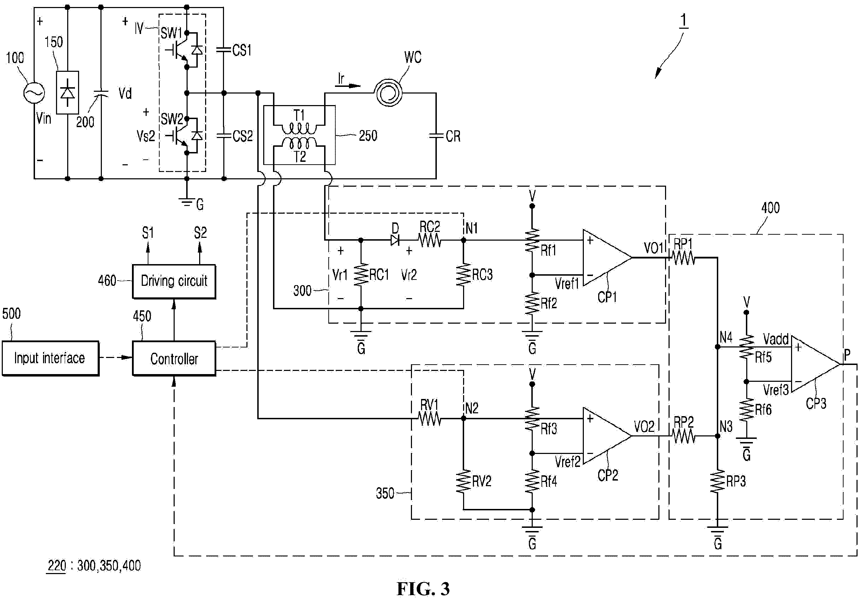

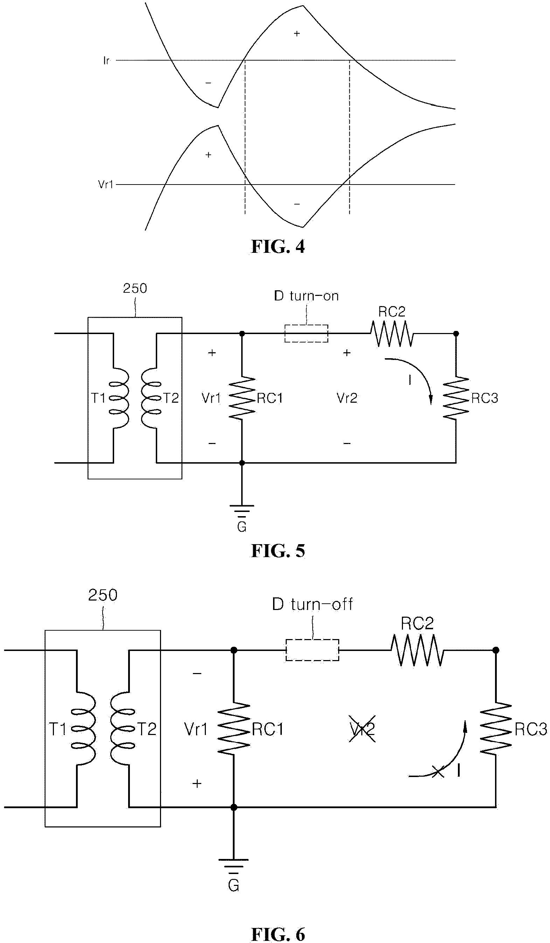

FIG. 3 is a block diagram showing an induction heating device of one embodiment, FIG. 4 is a view showing the waveforms of a voltage that is supplied to a first current sensing resistance, in one embodiment, and FIGS. 5 and 6 are circuit diagrams for describing the operation of a diode, based on a resonance voltage that is supplied to the first current sensing resistance, in one embodiment.

In one embodiment, an induction heating device 1 may comprise a rectification circuit 150, a DC link capacitor 200, an inverter IV, a working coil WC, a current transformer 250, a resonance capacitor CR, a phase sensing circuit 220, a controller 450, a driving circuit 460, and an input interface 500.

The rectification circuit 150 may comprise a plurality of diode elements. The rectification circuit 150 rectifies an input voltage Vin that is supplied from a power supply device 100, and outputs a voltage having a pulse waveform.

The DC link capacitor 200 smoothes the voltage that is output from the rectification circuit 150, and outputs a DC link voltage Vd.

The inverter IV supplies a resonance current Ir to the working coil WC, based on the DC link voltage Vd that is supplied from the DC link capacitor 200. The inverter IV may comprise a plurality of switching elements, e.g., a first switching element SW1 and a second switching element SW2. The first switching element SW1 and the second switching element SW2 may connect to each other in series.

The first switching element SW1 and the second switching element SW2 may be turned on and turned off alternately by a first switching signal S 1 and a second switching signal S2 that are supplied from the driving circuit 460. The alternate turn-on and turn-off of the first switching element SW1 and the second switching element SW2 may be referred to as the switching operations of the first switching element SW1 and the second switching element SW2.

A resonance current Ir is generated, based on the switching operations of the first switching element SW1 and the second switching element SW2. As the resonance current Ir is supplied to the working coil WC, a container provided on the working coil WC may be heated while an eddy current flows in the container.

A first snubber capacitor CS1 connects to the first switching element SW1 in parallel. A second snubber capacitor CS2 connects to the second switching element SW2 in parallel. The first snubber capacitor CS1 and the second snubber capacitor CS2 connect to each other in series.

The first snubber capacitor CS1 and the second snubber capacitor CS2 may reduce power loss caused by hard switching that is generated at a time when the first switching element SW1 and the second switching element SW2 are turned off.

One end of the working coil WC may connect to the phase sensing circuit 220 and the inverter IV, and the other end of the working coil WC may connect to the resonance capacitor CR. The working coil WC and the resonance capacitor CR may connect to each other in series to constitute a resonance circuit.

The input interface 500 receives an instruction that is input from the user to drive the induction heating device 1. A touch panel circuit or a button-type interface may be an example of the input interface 500. However, the sort of the input interface 500 is not limited. For example, the user may input a power level corresponding to a required power value of the working coil WC, or an instruction to start heating or an instruction to end heating, through the input interface 500.

The controller 450 controls the driving of the induction heating device 1, based on the instruction input through the input interface 500. For example, the controller 450 supplies a control signal to the driving circuit 460, based on the instruction input by the user to start heating, such that the working coil WC performs a heating operation. On the contrary, as the instruction to end heating is input, the controller 450 stops supplying the control signal to the driving circuit 460 such that the working coil WC stops the heating operation.

The driving circuit 460 outputs a first switching signal S1 and a second switching signal S2, based on a control signal of the controller 450. The first switching signal S1 and the second switching signal S2 are supplied respectively to the first switching element SW1 and the second switching element SW2.

The controller 450 may determine duty ratios or switching frequencies of the first switching signal S1 and the second switching signal S2 that are supplied to the first switching element SW1 and the second switching element SW2, based on a power level input by the user. The duty ratios or the switching frequencies of the first switching signal S1 and the second switching signal S2 may be determined based on a required power value corresponding to the power level input by the user. The controller 450 adjusts the duty ratios or the switching frequencies of the first switching signal S 1 and the second switching signal S2 such that an output power value of the working coil WC corresponds to the required power value corresponding to the power level input by the user.

The phase sensing circuit 220 may sense a phase difference between a resonance current Ir that is supplied to the working coil WC and a second switching voltage Vs2 that is supplied to the second switching element S2. The phase sensing circuit 220 may output a pulse signal P that corresponds to the phase difference between the resonance current Ir that is supplied to the working coil WC and the second switching voltage Vs2 that is supplied to the second switching element S2.

The controller 450 may calculate a final phase difference between the resonance current Ir that is supplied to the working coil WC and the second switching voltage Vs2 that is supplied to the second switching element S2, based on the pulse signal P. The controller 450 may adjust the output power value of the working coil WC, based on the final phase difference.

The phase sensing circuit 220 may comprise a current sensing circuit 300, a voltage sensing circuit 350, and a pulse signal output circuit 400.

The phase sensing circuit 220 may receive an input of a resonance current Ir of the working coil WC that is sensed through the current transformer 250.

The current transformer 250 may comprise a primary side T1 and a secondary side T2. The primary side T1 may connect between the inverter IV and the working coil WC, and the secondary side T2 may connect to the current sensing circuit 300. The coil winding number of the primary side T1, and the coil winding number of the secondary side T2 are inversely proportional to the magnitude of a current that flows respectively in the primary side T1 and the secondary side T2. The coil winding number of the secondary side T2 may be greater than the coil winding number of the primary side T1. Accordingly, the magnitude a current flowing in the secondary side T2 may be less than the magnitude of a current flowing in the primary side T1.

The first beaker T1 of the current transformer 250 connects between the inverter IV and the working coil WC. A resonance current Ir may flow in the primary side T1. A current flowing in the secondary side T2 has magnitude that is less than magnitude of the resonance current Ir flowing in the primary side T1. The current which flows in the secondary side T2, i.e., the resonance current the magnitude of which changes, may be supplied to the current sensing circuit 300.

The current sensing circuit 300 may receive the resonance current the magnitude of which changes from the current transformer 250. The current sensing circuit 300 may output a first voltage VO1, based on the resonance current Ir the magnitude of which changes. The first voltage VO1 may be input to the pulse signal output circuit 400.

In one embodiment, the current sensing circuit 300 may comprise first to third current sensing resistances RC1~RC3, a diode D, and a first comparator CP1.

The first current sensing resistance RC1 may connect to the secondary side T2 of the current transformer 250. The resonance current Ir flowing through the secondary side T2 may be transformed into a resonance voltage Vr1 having a phase opposite to that of the resonance current Ir, through the first current sensing resistance RC1.

As illustrated in FIG. 4, the phase of the resonance current Ir flowing in the primary side T1 of the current transformer 250 is opposite to the phase of the resonance voltage Vr1 supplied to the first current sensing resistance RC1 through the secondary side T2 of the current transformer 250. In other words, a difference between the phase of the resonance current Ir and the phase of the resonance voltage Vr1 supplied to the first current sensing resistance RC1 through the secondary side T2 of the current transformer 250 may be 180 degrees.

Referring back to FIG. 3, one end of the diode D may connect to the first current sensing resistance RC1, and the other end of the diode D may connect to the second current sensing resistance RC2. The diode D may remove a negative voltage from the resonance voltage Vr1 that is transformed through the first current sensing resistance RC1.

As illustrated in FIG. 5, if the resonance voltage Vr1 supplied to the first current sensing resistance RC1 is a positive voltage (+), the diode D is turned on (D turn-on). Accordingly, a current I flows in the second current sensing resistance RC2 and the third current sensing resistance RC3. A voltage Vr2 having the same magnitude as the voltage Vr1 that is supplied to the first current sensing resistance RC1 may be supplied to the second current sensing resistance RC2 and the third current sensing resistance RC3.

On the contrary, if the resonance voltage Vr1 supplied to the first current sensing resistance RC1 is a negative voltage (-) as illustrated in FIG. 6, the diode D is turned off (D turn-off) and turns into a circuit. Accordingly, a current I does not flow in the second current sensing resistance RC2 and the third current sensing resistance RC3. As a result, the magnitude of the voltage Vr2 that is supplied to the second current sensing resistance RC2 and the third current sensing resistance RC3 becomes 0.

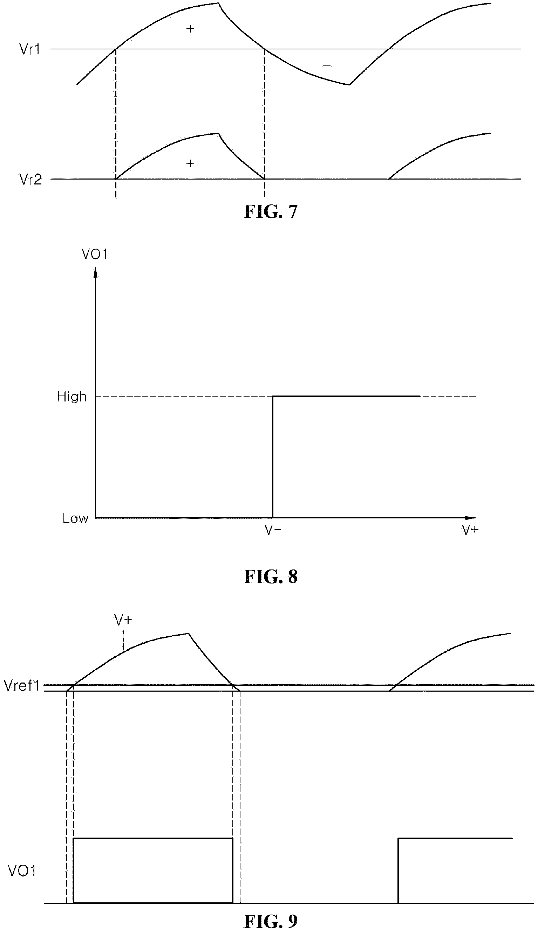

Thus, the resonance voltage Vr2, which is a voltage obtained by removing a negative voltage from the resonance voltage Vr1, may be supplied to the second current sensing resistance RC2 and the third current sensing resistance RC3. FIG. 7 shows the waveform of the resonance voltage Vr1 that is supplied to the first current sensing resistance, and the waveform of the resonance voltage Vr2 that is supplied to the second current sensing resistance RC2 and the third current sensing resistance RC3, respectively.

Referring back to FIG. 3, one end of the second current sensing resistance RC2 may connect to the diode D, and the other end of the second current sensing resistance RC2 may connect to the third current sensing resistance RC3. The second current sensing resistance RC2 is used to distribute the resonance voltage Vr2 from which a negative voltage is removed.

One end of the third current sensing resistance RC3 may connect to the second current sensing resistance RC2, and the other end of the third current sensing resistance RC3 may connect to ground G. The third current sensing resistance RC3 is also used to distribute the resonance voltage Vr2 from which a negative voltage is removed, as described above with reference to the second current sensing resistance RC2.

The resonance voltage distributed to the third current sensing resistance RC3 may be supplied to the positive input terminal of the first comparator CP1 (i.e., the (+) input terminal of CP1). Herein, the resonance voltage Vr2 from which a negative voltage is removed is distributed by the second current sensing resistance RC2 and the third current sensing resistance RC3, and the resonance voltage distributed to the third current sensing resistance RC3 is supplied to the positive input terminal of the first comparator CP1, since the voltage that is supplied to the positive input terminal of the first comparator CP1 needs to be less than a driving voltage for driving the first comparator CP1.

FIGS. 8 and 9 are views showing the waveform of a first voltage that is output from a current sensing circuit, in one embodiment.

The first comparator CP1 may connect to a first node N1 between the second current sensing resistance RC2 and the third current sensing resistance RC3 and output a first voltage VO1. The first comparator CP1 may compare the resonance voltage supplied to its positive input terminal with a first reference voltage Vref1 supplied to its negative input terminal (i.e., the (-) input terminal of CP1), and based on results of the comparison, output the first voltage VO1.

In one embodiment, the controller 450 may connect to the first node N1 and sense the magnitude of a voltage supplied to the first node N1, and based on the sensed magnitude of the voltage, sense the magnitude a resonance current Ir that is supplied to the working coil WC.

The first reference voltage Vref1 may be a ground voltage (i.e., 0 V), for example, but be set to a voltage having a value greater than 0, considering a voltage drop and the like caused by a noise or a leakage current. The first reference voltage Vref1 may be a voltage that is supplied to a second reference resistance Rf2, in the case where a voltage V of a value greater than 0 is distributed with a first reference resistance Rf1 and the second reference resistance Rf2.

In the case where the magnitude of a resonance voltage (V+) supplied to the positive input terminal is the magnitude of a voltage V- supplied to the negative input terminal, i.e., the first reference voltage Vrefl, or greater, the first comparator CP1 may output a high-level voltage (e.g., 5 V) as the first voltage VO1. On the contrary, in the case where the magnitude of a resonance voltage (V+) supplied to the positive input terminal is less than the magnitude of a voltage V-supplied to the negative input terminal, i.e., the first reference voltage Vrefl, the first comparator CP1 may output a low-level voltage (e.g., 0 V) as the first voltage VO1. FIG. 9 shows the waveforms of the resonance voltage V+ and the first voltage VO1 corresponding to the resonance voltage V+ respectively.

The voltage sensing circuit 350 may connect to the inverter IV and be supplied with a second switching voltage Vs2 that is supplied to the second switching element SW2. The voltage sensing circuit 350 may output a second voltage VO2, based on the second switching voltage Vs2. The second voltage VO2 may be input to the pulse signal output circuit 400.

In one embodiment, the voltage sensing circuit 350 may comprise a first voltage sensing resistance RV1, a second voltage sensing resistance RV2, and a second comparator CP2.

One end of the first voltage sensing resistance RV1 may connect to the second switching element S2, and the other end may connect to the second voltage sensing resistance RV2. The first voltage sensing resistance RV1 is used to distribute the second switching voltage Vs2 that is provided from the inverter IV to the voltage sensing circuit 350.

One end of the second voltage sensing resistance RV2 may connect to the first voltage sensing resistance RV1, and the other end of the second voltage sensing resistance RV2 may connect to the ground terminal G. Like the first voltage sensing resistance RV1, the second voltage sensing resistance RV2 is used to distribute the second switching voltage Vs2.

The second switching voltage Vs2, which is provided to the voltage sensing circuit 350 from the inverter IV, is distributed by the first voltage sensing resistance RV1 and the second voltage sensing resistance RV2. The switching voltage distributed by the second voltage sensing resistance RV2 may be supplied to the positive input terminal of the second comparator CP2 (i.e., the (+) input terminal of CP2). The second switching voltage Vs2 is distributed by the first voltage sensing resistance RV1 and the second voltage sensing resistance RV2, and the switching voltage distributed by the second voltage sensing resistance RV2 is supplied to the positive input terminal of the second comparator CP2, since the voltage, which is supplied to the positive input terminal of the second comparator CP2, needs to be less than a driving voltage for driving the second comparator CP2 itself.

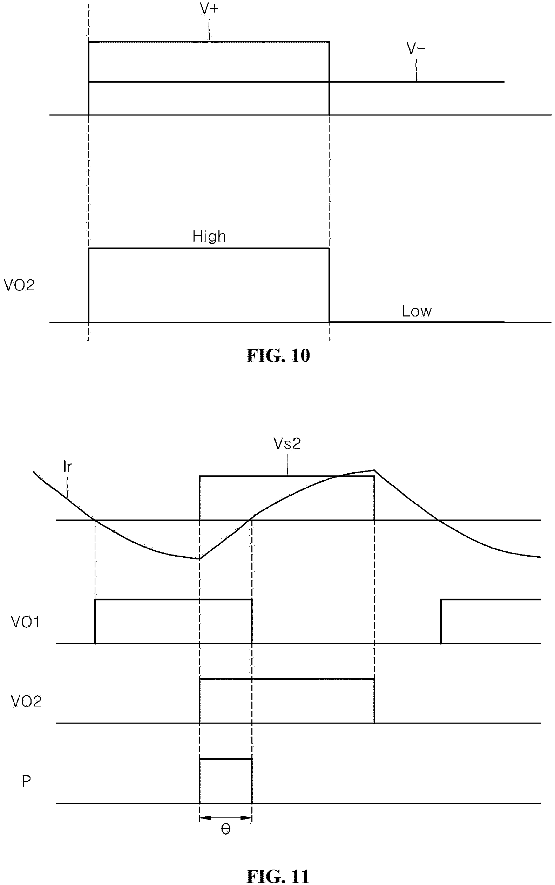

FIG. 10 is a view showing the waveform of a second voltage that is output from a voltage sensing circuit, in one embodiment.

The second comparator CP2 may connect to a second node N2 between the first voltage sensing resistance RV1 and the second voltage sensing resistance RV2, and output a second voltage VO2. The second comparator CP2 may compare the second switching voltage supplied to its positive input terminal with a second reference voltage Vref2 supplied to its negative input terminal (i.e., the (-) input terminal of CP2), and based on results of the comparison, output the second voltage VO2.

In one embodiment, the controller 450 may connect to the second node N2 and sense the magnitude of a voltage supplied to the second node N2, and based on the sensed magnitude of the voltage, sense the magnitude a switching voltage Vs2 supplied to the second switching element S2.

In theory, the second reference voltage Vref2 may be a ground voltage (i.e., 0 V) ideally, but be set to a voltage having a value greater than 0, considering a voltage drop and the like caused by a noise or a leakage current. The second reference voltage Vref2 may be a voltage that is supplied to a fourth reference resistance Rf4, in the case where a voltage V of a value greater than 0 is distributed with a third reference resistance Rf3 and the fourth reference resistance Rf4.

In the case where the magnitude of a switching voltage (V+) supplied to the positive input terminal is the magnitude of a voltage V- supplied to the negative input terminal, i.e., the second reference voltage Vref2, or greater, the second comparator CP2 may output a high-level voltage (e.g., 5 V) as the second voltage VO2. On the contrary, in the case where the magnitude of a switching voltage (V+) supplied to the positive input terminal is less than the magnitude of a voltage V- supplied to the negative input terminal, i.e., the second reference voltage Vref2, the second comparator CP2 may output a low-level voltage (e.g., 0 V) as the second voltage VO2.

The first comparator CP1 or the second comparator CP2 may be a CMOS comparator or an open drain comparator, but not limited.

The pulse signal output circuit 400 may receive a first voltage VO1 and a second voltage VO2 respectively from the current sensing circuit 300 and the voltage sensing circuit 350, and based on the first and second voltages VO1, VO2 provided, output a pulse signal P. The pulse signal P may be input to the controller 450.

In one embodiment, the pulse signal output circuit 400 may comprise first to third resistor for pulse generations RP1-RP3 and a third comparator CP3.

The first resistor for pulse generation RP1 may connect to the output terminal of the current sensing circuit 300 (i.e., the output terminal of the first comparator CP1). One end of the first resistor for pulse generation RP1 may connect to the output terminal of the first comparator CP1, and the other end may connect to a fourth node N4. The fourth node N4 is a node that is disposed between a third node N3 between the second and third resistor for pulse generations RP2, RP3, and the first resistor for pulse generation RP1.

The second resistor for pulse generation RP2 may connect to the output terminal of the voltage sensing circuit 350 (i.e., the output terminal of the second comparator CP2). One end of the second resistor for pulse generation RP2 may connect to the output terminal of the second comparator CP2, and the other end may connect to the third node N3. The third node N3 is a node that is disposed between the second and third resistor for pulse generations RP2, RP3.

The third resistor for pulse generation RP3 may connect between the second resistor for pulse generation RP2 and the ground terminal G. One end of the third resistor for pulse generation RP3 may connect to the third node N3, and the other end may connect to the ground terminal G.

The third resistor for pulse generation RP3 distributes a voltage together with the first and second resistor for pulse generations RP1, RP2, such that a voltage Vadd, which is supplied to the positive input terminal of the third comparator CP3 (i.e., the (+) input terminal of CP3), becomes less than a driving voltage for driving the third comparator CP3 itself.

The first voltage VO1 output from the current sensing circuit 300 may be supplied to the fourth node N4 through a first voltage distribution process by the first to third resistor for pulse generation RP1-RP3. The second voltage VO2 output from the voltage sensing circuit 350 may be supplied to the fourth node N4 through a second voltage distribution process by the first to third resistor for pulse generation RP1-RP3. The voltage supplied to the fourth node N4 through the first voltage distribution process, and the voltage supplied to the fourth node N4 through the second voltage distribution process may be merged together and be supplied to the positive input terminal of the third comparator CP3.

The third comparator CP3 may connect to the fourth node N4 that is disposed between the third node N3 between the second and third resistor for pulse generations RP2, RP3, and the first resistor for pulse generation RP1, and output a pulse signal P. The third comparator CP3 may compare a voltage supplied to its positive input terminal (i.e., the (+) input terminal of CP3) with a third reference voltage Vref3 supplied to its negative input terminal (i.e., the (-) input terminal of CP3), and based on results of the comparison, generate a pulse signal P.

For example, under the assumption that RP1 and RP2 are100KΩ and that RP3 is 18 KS2, in the case of VO1 of 5 V and VO2 of 0 V, Vadd is 0.66 V, in the case of VO1 of 0 V and VO2 of 5 V, Vadd is 0.66 V, and in the case of VO1 of 5 V and VO2 of 5 V, Vadd may be 1.32 V.

At this time, the magnitude of the third reference voltage Vref3 may be set to be between 0.66 V-1.32 V (e.g., 1 V). Accordingly, only if VO1 and VO2 are all at a high level (e.g., 5 V), a pulse signal P of a high level (e.g., a voltage value of '1' or a certain magnitude) may be output. Certainly, in the other cases (any one of VO1 and VO2 is at a low level), a pulse signal P of a low level (e.g., '0') may be output.

That is, in the case where the first and second voltages VO1, VO2 are all at a high level, the pulse signal output circuit 400 may output a pulse signal P of a high level, and in the case where any one of the first and second voltages VO1, VO2 is at a low level, the pulse signal output circuit 400 may output a pulse signal P of a low level.

The third reference voltage Vref3 may be a voltage that is supplied to a sixth reference resistance Rf6 at a time when a specific magnitude of a voltage V is distributed with a fifth reference resistance Rf5 and the sixth reference resistance Rf6.

In the case where the magnitude of a voltage Vadd supplied to the positive input terminal is the magnitude of the third reference voltage Vref3 supplied to the negative input terminal, or greater, the third comparator CP3 may output a high-level pulse signal P. On the contrary, in the case where the magnitude of a voltage Vadd supplied to the positive input terminal is less than the magnitude of the third reference voltage Vref3 supplied to the negative input terminal, the third comparator CP3 may output a low-level pulse signal P.

The width θ of a pulse signal P that is output from the pulse signal output circuit 400 indicates a phase difference between a resonance current Ir supplied to the working coil WC and the second switching voltage Vs2 supplied to the second switching element S2, i.e., a time delay between the zero-crossing point of the resonance current Ir and the zero-crossing point of the second switching voltage Vs2. Accordingly, the controller 450 may calculate the width θ of a pulse signal P that is output from the pulse signal output circuit 400 as a phase difference between the resonance current Ir supplied to the working coil WC and the second switching voltage Vs2 supplied to the second switching element S2.

While the working coil WC is being driven based on the switching operations of the first switching element SW1 and the second switching element SW2, the controller 450 may calculate a phase difference between the resonance current Ir supplied to the working coil WC and the second switching voltage Vs2 supplied to the second switching element S2, based on the width θ of a pulse signal P that is output from the phase sensing circuit 220, continuously and repeatedly.

At a time when the first switching element SW1 and the second switching element SW2 performs a switching operation, the magnitude of the second switching voltage Vs2 is proportional to the magnitude of an input voltage Vin. As the peak value of the input voltage Vin increases, the peak value of the second switching voltage Vs2 increases, and as the peak value of the input voltage Vin decreases, the peak value of the second switching voltage Vs2 decreases.

As described with reference to FIG. 10, the second voltage VO2 is generated based on results of the comparison between the second reference voltage Vref2 and the second switching voltage Vs2. However, since the second reference voltage Vref2 is hardly set to a predetermined value or less, an error rate of the second voltage VO2 is likely to increase, or a delay is likely to occur while the second voltage VO2 is output, as the magnitude of the second switching voltage Vs2 decreases.

As described with reference to FIG. 11, a phase difference between the resonance current Ir supplied to the working coil WC and the second switching voltage Vs2 supplied to the second switching element S2 is calculated based on the first voltage VO1 and the second voltage VO2. Thus, a high error rate of the second voltage VO2 or the occurrence of a delay in the output of the second voltage VO2 result in an increase in the error rate of a phase difference between the resonance current Ir supplied to the working coil WC and the second switching voltage Vs2 supplied to the second switching element S2.

To reduce the error rate of the phase difference between the resonance current Ir supplied to the working coil WC and the second switching voltage Vs2 supplied to the second switching element S2 and obtain an accurate phase difference, the controller 450 may obtain a plurality of phase differences that is calculated for a predetermined detection duration, and determine an average of the plurality of phase differences obtained as a final phase difference between the resonance current Ir supplied to the working coil WC and the second switching voltage Vs2 supplied to the second switching element S2.

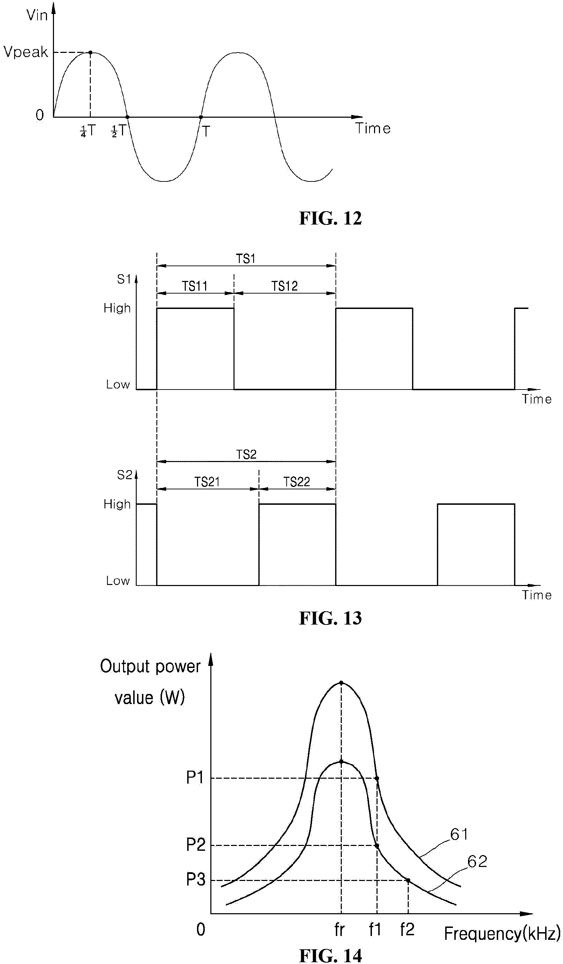

FIG. 12 is a view showing the waveform of an input voltage that is input to the induction heating device in one embodiment.

As shown in FIG. 12, the waveform of the input voltage Vin that is supplied to the induction heating device 1 may be a sine waveform having a peak value Vpeak and a predetermined cycle T. In the present disclosure, the time point at which a peak value Vpeak of the input voltage Vin appears (e.g., T/4 or 3T/4) may be referred to a peak time of the input voltage Vin.

As described above, the magnitude of the second switching voltage Vs2 is proportional to the magnitude of the input voltage Vin. Accordingly, as the magnitude of the input voltage Vin increases, the magnitude of the second switching voltage Vs2 increases. Additionally, as the magnitude of the second switching voltage Vs2 increases, the error rate of the second voltage VO2 decreases, and a delay in the output of the second voltage VO2 is less likely to occur.

In one embodiment, the detection duration for which the plurality of phase differences is obtained may be defined based on the peak time of the input voltage Vin or the cycle of the input voltage Vin.

In one embodiment, a lower bound of the detection duration may be set to be greater than a value that is calculated by multiplying peak time by 0.9, and an upper bound of the detection duration may be set to be less than a value that is calculated by multiplying peak time by 1.1.

For example, in the case where the input voltage Vin is an AC voltage of 220 V and 60 Hz, the peak time T/4 may be 4.15 ms. At this time, the lower bound of the detection duration may be set to be greater than 3.735 ms, and the upper bound of the detection duration may be set to be less than 4.565 ms. Accordingly, the controller 450 may set the lower bound of the detection duration to 4 ms greater than 3.735 ms and set the upper bound of the detection duration to 4.2 ms less than 4.565 ms. The controller 450 may calculate an average of 20 phase differences that are obtained for 4-4.2 ms as a final phase difference. In the same way, the controller 450 may calculate an average of 20 phase differences that are obtained for 4-4.2 ms as a final phase difference in each cycle, with respect to a start point of each cycle of the input voltage Vin. However, the upper bound and the lower bound of the detection duration described above are provided as an example, and may be set in a different way depending on embodiments.

Further, the peak time of the input voltage Vin may also defined as a value that is calculated by multiplying the cycle T of the input voltage Vin by 0.25. In one embodiment, the lower bound of the detection duration may be set to be greater than a value that is calculated by multiplying the value, calculated by multiplying the cycle T of the input voltage Vin by 0.25, by 0.9, and the upper bound of the detection duration may be set to be less than a value that is calculated by multiplying the value, calculated by multiplying the cycle T of the input voltage Vin by 0.25, by 1.1

As a phase difference is obtained for the detection duration that is set based on the peak time of the input voltage Vin, the error rate of the second voltage VO2 decreases, and a delay in the output of the second voltage VO2 is less likely to occur. Thus, an accurate final phase difference may be calculated.

FIG. 13 is a view showing the waveforms of a first switching signal that is supplied to a first switching element and a second switching signal that is supplied to a second switching element, in one embodiment. Additionally, FIG. 14 is a graph showing a curve of the resonance properties of a working coil.

As a required power value corresponding to a power level input through the input interface 500 is determined, the controller 450 may control the switching operations of the first switching element SW1 and the second switching element SW2 to adjust an output power value of the working coil WC to the required power value. In one embodiment, the controller 450 may adjust the switching frequency or the duty ratio of the first switching signal S1 and the second switching signal S2 that are respectively supplied to the first switching element SW1 and the second switching element SW2, to adjust the output power value of the working coil WC.

For example, the controller may adjust the switching frequencies (1/TS 1 or 1/TS2) of the first switching signal S1 and the second switching signal S2, to adjust the output power value of the working coil WC.

Referring to FIG. 14, in the case where the resonance characteristic of the working coil WC are presented as a curve 62, if the switching frequencies of the first switching signal S1 and the second switching signal S2 are set to f1, the output power value of the working coil WC is P2, and if the switching frequencies of the first switching signal S1 and the second switching signal S2 are set to f2, the output power value of the working coil WC is P3. (P2>P3).

Accordingly, the controller 450 increases the switching frequencies of the first switching signal S 1 and the second switching signal S2 to decrease the output power value of the working coil WC or decreases the switching frequencies of the first switching signal S1 and the second switching signal S2 to increase the output power value of the working coil WC.

In one embodiment, the controller 450 may adjust the duty ratios of the first switching signal S1 and the second switching signal S2 to adjust the output power value of the working coil WC. Referring to FIG. 13, the duty ratio of the first switching signal S1 may be defined as TS11/TS1. Additionally, the duty ratio of the second switching signal S2 may be defined as TS22/TS2.

FIG. 14 show a resonance property curve 61 of the working coil WC in the case of a 50 % duty ratio of the first switching signal S1, and a resonance property curve 62 of the working coil WC in the case of a 30 % duty ratio of the first switching signal S1, respectively. In FIG. 14, fr denotes a resonance frequency of the working coil WC.

In the case where the switching frequencies of the first switching signal S1 and the second switching signal S2 are f1, if the duty ratio of the first switching signal S1 is set to 50 %, the output power value of the working coil WC is P1. However, in the state where the switching frequencies of the first switching signal S1 and the second switching signal S2 remain at f1, if the duty ratio of the first switching signal S1 changes from 50 % to 30 %, the output power value of the working coil WC decreases to P2. (P1>P2)

Thus, the controller 450 adjusts the duty ratio of the first switching signal S1 or the second switching signal S2 without adjusting the switching frequencies of the first switching signal S1 and the second switching signal S2, to adjust the output power value of the working coil WC.

When the switching frequencies or the duty ratios of the first switching signal S1 and the second switching signal S2 are adjusted to adjust the output power value of the working coil WC, the controller 450 may compare a final phase difference with a predetermined reference value. The reference value is a value that is set to prevent the switching elements SW1, SW2 from being overheated or damaged. That is, the final phase difference between the resonance current Ir that is supplied to the working coil WC and the second switching voltage Vs2 that is supplied to the second switching element S2 needs to remain at the reference value or greater, to prevent the switching elements SW1, SW2 from being overheated or damaged. The reference value may be set differently depending on embodiments.

In one embodiment, the controller 450 may increase the output power value of the working coil WC, if the final phase difference between the resonance current Ir that is supplied to the working coil WC and the second switching voltage Vs2 that is supplied to the second switching element S2 is the predetermined reference value or less.

As described above, the output power value of the working coil WC decreases, as the switching frequencies of the first switching signal S1 and the second switching signal S2 decrease, or the duty ratio of the first switching signal S 1 decreases (or the duty ratio of the second switching signal S2 increases). However, as the output power value of the working coil WC decreases, the final phase difference between the resonance current Ir that is supplied to the working coil WC and the second switching voltage Vs2 that is supplied to the second switching element S2 decreases. If the final phase difference is too small, the switching element may be overheated or damaged due to its hard switching.

If the final phase difference between the resonance current Ir that is supplied to the working coil WC and the second switching voltage Vs2 that is supplied to the second switching element S2 is the predetermined reference value or less, the controller 450 may increase the output power value of the working coil WC. In one embodiment, the controller 450 may increase the output power value of the working coil WC until the final phase difference becomes greater than the reference value. Under the control, the final phase difference between the resonance current Ir that is supplied to the working coil WC and the second switching voltage Vs2 that is supplied to the second switching element S2 may remain at a value greater than the reference value.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the range of the disclosure though not explicitly described in the description of the embodiments.

## Claims

1. An induction heating device, comprising:
a working coil (WC);
an inverter (IV) comprising a first switching element (SW1) and a second switching element (SW2), the inverter (IV) is configured to supply a resonance current (Ir) to the working coil (WC);
a phase sensing circuit (220) outputting a pulse signal (P) that indicates a phase difference between the resonance current (Ir) and a switching voltage (Vs2) of the second switching element (SW2); and
a controller (450) configured to calculate a final phase difference between the resonance current (Ir) and the switching voltage (Vs2) of the second switching element (SW2) based on the pulse signal (P), and to adjust an output power value of the working coil (WC) based on the final phase difference.

2. The induction heating device of claim 1, wherein the final phase difference is an average of a plurality of phase differences calculated during a predetermined detection duration.

3. The induction heating device of claim 1 or 2, wherein the detection duration is defined based on peak time of an input voltage that is input to the induction heating device (1).

4. The induction heating device of claim 2 or 3, wherein a lower bound of the detection duration is set to be greater than a value that is calculated by multiplying the peak time by 0.9, and/or an upper bound of the detection duration is set to be less than a value that is calculated by multiplying the peak time by 1.1.

5. The induction heating device of any one of the preceding claims, wherein the detection duration is defined based on a cycle of an input voltage that is input to the induction heating device.

6. The induction heating device of claim 5, wherein the detection duration is defined based on a value that is calculated by multiplying the cycle of the input voltage by 0.25.

7. The induction heating device of any one of the preceding claims, wherein the controller (450) is configured to adjust a duty ratio or a switching frequency of a switching signal for controlling a switching operation of the first switching element (SW1) and the second switching element (SW2), to adjust the output power value of the working coil (WC).

8. The induction heating device of any one of the preceding claims, wherein the controller (450) is configured to increase the output power value of the working coil (WC) if the final phase difference is a predetermined reference value or less.

9. The induction heating device of any one of the preceding claims, wherein the final phase difference remains at a value greater than a predetermined reference value.

10. The induction heating device of any one of the preceding claims, the phase sensing circuit (220), comprising:
a current sensing circuit (300) for outputting a first voltage (VO1) based on a resonance current (Ir) of the working coil (WC).
a voltage sensing circuit (350) for outputting a second voltage (VO2) based on a switching voltage (Vs2) of the second switching element (SW2); and
a pulse signal output circuit (400) outputting the pulse signal (P) based on the first voltage (VO1) and the second voltage (VO2).

11. The induction heating device of claim 10, further comprising a current transformer (250) connected between the working coil (WC) and the inverter (IV) for sensing the resonance current (Ir) of the working coil (WC).

12. The induction heating device of claim 10 or 11, wherein the current sensing circuit (300) comprises:
a first current sensing resistance (RC1) connecting to a secondary side of the current transformer (250);
a diode (D) connecting to the first current sensing resistance (RC1);
a second current sensing resistance (RC2) connecting to the diode (D) in series;
a third current sensing resistance (RC3), one end of which connects to the second current sensing resistance (RC2), and the other end of which connects to ground (G); and
a first comparator (CP1) connecting to a first node between the second and third current sensing resistances (RC2, RC3), and outputting the first voltage (VO1).

13. The induction heating device of claim 10, 11 or 12, wherein the voltage sensing circuit (350) comprises:
a first voltage sensing resistance (RV1) connecting to the second switching element (SW2);
a second voltage sensing resistance (RV2), one end of which connects to the first voltage sensing resistance (RV1), and the other end of which connects to ground (G); and
a second comparator (CP2) connecting to a second node between the first and second voltage sensing resistances (RV1, RV2), and outputting the second voltage (VO2).

14. The induction heating device of claim 10, 11, 12 or 13, wherein the pulse signal output circuit (400) comprises:
a first resistor (RP1) for pulse generation connected to an output terminal of the current sensing circuit (300);
a second resistor (RP2) for pulse generation connected to an output terminal of the voltage sensing circuit (350);
a third resistor (RP3) for pulse generation connected between the second resistor (RP2) for pulse generation and ground (G); and
a third comparator (CP3) connected to a fourth node (N4) disposed between the second resistor (RP2) for pulse generation and the third resistor (RP3) for pulse generation, and the first resistor (RP1) for pulse generation, the third comparator (CP3) is configured to output the pulse signal (P).
